**Europäisches Patentamt**

(19) **European Patent Office**

**Office européen des brevets**

(11) Veröffentlichungsnummer: **0 034 328**
**B1**

(12) # EUROPÄISCHE PATENTSCHRIFT

(45) Veröffentlichungstag der Patentschrift:
**01.08.84**

(21) Anmeldenummer: **81100936.4**

(22) Anmeldetag: **11.02.81**

(51) Int. Cl.³: **C 04 B 35/56**, C 01 B 31/36

(54) **Verfahren zur Herstellung von Formkörpern auf der Basis von Siliziumkarbid.**

(30) Priorität: **15.02.80 DE 3005587**

(43) Veröffentlichungstag der Anmeldung:
**26.08.81 Patentblatt 81/34**

(45) Bekanntmachung des Hinweises auf die Patenterteilung:
**01.08.84 Patentblatt 84/31**

(84) Benannte Vertragsstaaten:
**AT BE CH FR GB IT LI NL SE**

(56) Entgegenhaltungen:
**DE - A - 2 232 719**
**DE - A - 2 627 856**
**DE - B - 2 718 142**
**DE - B - 2 718 143**
**DE - B - 2 737 521**
**US - A - 4 009 143**

(73) Patentinhaber: **Kernforschungsanlage Jülich Gesellschaft mit beschränkter Haftung, Postfach 1913, D-5170 Jülich (DE)**

(72) Erfinder: **Luhleich, Hartmut, Dr., Chlodwigplatz 15, D-5160 Düren (DE)**
Erfinder: **Dias, Francisco Joachim, An der Lünette 3, D-5170 Jülich (DE)**

ACTORUM AG

## Beschreibung

Die Erfindung bezieht sich auf ein Verfahren zur Herstellung von Formkörpern auf Basis von Siliziumkarbid, bei denen auch im Mikrobereich ein homogener und gleichmässiger Verbund der Siliziumkarbidteilchen vorhanden ist, aus pulverförmigem und ggf. körnigem Ausgangsmaterial unter Verwendung von pulverförmigem und ggf. körnigem Kohlenstoff — wie gemahlenem Koks, Elektrographit, Naturgraphit, Holzkohle, Russ —, wobei die Körner oder Partikeln des Pulvers mit einem organischen Bindemittel umhüllt werden und in einer anschliessenden Verfahrensstufe die dabei gebildete Masse in vorbestimmter Weise als Grünkörper geformt und sodann durch Aufheizen bis zu einer Maximaltemperatur von 800°C bis 1000°C verkokt wird.

Formkörper unter Verwendung von Kohlenstoff, unter Zugabe von Silizium zur Bildung von Siliziumkarbid sowie unter Verwendung von Siliziumkarbid sind bekannt.

Aus diesen Werkstoffen hergestellte Formteile erlangen in zunehmendem Masse Bedeutung. Diese Formkörper weisen nämlich eine hohe Temperatur- sowie eine grosse Temperaturwechselbeständigkeit, ferner grosse Festigkeit und im Vergleich zu Metallen eine geringere Dichte auf sowie eine sehr gute Korrosionsbeständigkeit gegenüber den meisten Substanzen, insbesondere gegenüber Sauerstoff und Wasserstoff. Hinzu kommt, dass die für diese Körper verwendeten Rohstoffe preiswert sind und die Rohstoffbasis auf lange Zeit gesichert ist.

Es sind eine Reihe von Verfahren bekannt, wie Formkörper der vorbezeichneten Art hergestellt werden können. So gehört beispielsweise ein unter der Bezeichnung «Heisspressverfahren» bekanntes Verfahren zum Stande der Technik. Dabei wird Siliziumkarbid unter Anwendung von zwischen 200 und 2000 bar liegenden Drucken bei Temperaturen von 1750°C bis 2200°C verpresst. Zwar sind nach diesem bekannten Verfahren auch kompliziert gestaltete Formkörper, wie beispielsweise Bauteile von Heissgasturbinen, herstellbar, doch ist dazu eine nachträgliche, sehr aufwendige und kostspielige mechanische Bearbeitung erforderlich. Ausserdem enthalten die Formteile Fremdelemente, wie beispielsweise Bor oder Magnesium, die bei dem bei der Herstellung ablaufenden Sinterprozess als Sinterhilfen zugegeben werden. Das wirkt sich insbesondere nachteilig auf die Festigkeit aus, wenn die nach diesem Verfahren hergestellten Formkörper hohen Temperaturen ausgesetzt werden. Abgesehen davon sind solche Bauteile, wenn Bor als Sinterhilfe beigegeben worden war, deshalb als Reaktorbauteile nicht verwendbar, weil Bor ein Neutronenabsorber ist. Als weiterer Nachteil kommt hinzu, dass die Grösse der Formkörperteile nicht beliebig wählbar ist, sondern von der notwendigerweise begrenzten Grösse der Heisspresse abhängt. Dieses bekannte Verfahren ist infolgedessen sehr kostspielig, denn es erfordert hohe Investitionskosten, einen grossen Energieaufwand und eine aufwendige Nachbearbeitung der Formkörper.

Bei einem weiteren, aus der US-A-3 591 840 und der DE-A 2 627 856 bekannten Verfahren, bei dem man von der Verwendung von $\alpha$- und $\beta$-Siliziumkarbidpulvern ausgeht, deren Korngrösse im Bereich von 1 $\mu$m liegt, erfolgt der Sintervorgang ohne Anwendung von Druck. Das wird durch die Wahl eines geeigneten Mischungsverhältnisses zwischen $\alpha$- und $\beta$-Siliziumkarbid und durch Verwendung besonderer Zusätze erreicht. Die notwendige Formgebung erfolgt dabei durch Pressen, Extrudieren, Einschlämmen oder dergleichen. Soweit dabei Gleitmittel verwendet werden, muss darauf geachtet werden, dass der anschliessende Sintervorgang nicht gestört wird. Die Temperaturen bei dem dabei notwendigen Reaktionssintern liegen zwischen 1900°C und 2100°C. Die Sinteratmosphäre ist Argon, und der Druck liegt bei 1 bar. Nachteilig ist bei diesem Verfahren jedoch, dass ebenso wie bei dem vorerwähnten Heisspressverfahren Fremdelementzusätze mit allen sich daraus ergebenden weiteren Nachteilen verwendet werden müssen. Ausserdem ist der Aufwand für die Herstellung und Mischung des verwendeten Pulvers nicht unerheblich, weil zur Herstellung des $\beta$-Siliziumkarbids die vorhergehende Abscheidung aus der Gasphase erforderlich ist. Ein weiterer Nachteil besteht darin, dass bereits eine geringe, an der Oberfläche der Körner oder Partikeln anhaftende Sauerstoffmenge bei der Umsetzung mit dem normalerweise zugegebenen Kohlenstoff nicht vollständig durch den Kohlenstoff entfernt wird und daher den Sintervorgang nicht unerheblich beeinträchtigt. Bekannt ist auch ein Reaktionssinterverfahren, bei dem der Verbund der Siliziumkarbidteilchen dadurch erzielt wird, dass den Siliziumkarbidteilchen zunächst Kohlenstoffpulver beigefügt wird, das mit Siliziumdampf oder flüssigem Silizium zu Siliziumkarbid reagiert und sich dabei mit den Siliziumkarbidteilchen verbindet. Die Silizierung wird unter Schutzgas bei einer Temperatur zwischen etwa 1500°C und 2300°C durchgeführt. Dabei wird sowohl unter Normaldruck als auch unter vermindertem Druck gearbeitet (vergleiche US-A-3 275 722 und GB-A-866 813). Die Umsetzungszeiten liegen bei diesen bekannten Verfahren je nach den jeweiligen Voraussetzungen zwischen einigen Minuten und mehreren Stunden. Die Nachteile dieses bekannten Verfahrens bestehen darin, dass bei der Verwendung von flüssigem Silizium die dabei gebildeten Formkörper zur Silizierung in das Siliziumbad getaucht werden müssen und im Anschluss daran die Oberfläche des Formkörpers von anhaftendem Silizium befreit werden muss. Ausserdem kommt das Tauchverfahren nur für verhältnismässig dünne Wandstärken in Frage, da, selbst wenn zuvor ein Körper mit hinreichender Porosität gebildet wird, die Eindringtiefe des flüssigen Siliziums nicht tiefer als etwa 10 mm reicht. Wird der zunächst gebildete Formkörper in eine Siliziumdampfatmosphäre gebracht, ist die Reaktionsdauer sehr lang und infolgedessen der Energiebedarf sehr hoch. Die nach diesem Verfahren hergestellten Formkörper bestehen aus einem porösen Siliziumkarbidgerüst, wobei die Poren mit Silizium gefüllt sind. Die Verwendung eines Siliziumbades hat den Nachteil, dass die Lebensdauer des Behälters für das Bad in hohem Masse von den jeweiligen Betriebsbedingungen abhängig ist. Im übrigen ist sie begrenzt, das Verfahren infolgedessen kostspielig. Nachteilig ist schliesslich, dass auch bei diesem Verfahren die Grösse der danach hergestellten Formkörper begrenzt ist.

Eine Abwandlung dieses bekannten Reaktionssinterverfahrens ist die Silizierung von Formkörpern aus Kohlenstoff mit flüssigem oder gasförmigem Silizium zu Siliziumkarbid. Auch bei diesem Verfahren ist es notwendig, dass die Formkörper eine ausreichende und offene Porosität besitzen. Daher sind die Abmessungen der nach diesem Verfahren hergestellten und zu silizierenden Formkörper durch die Eindringtiefe des Siliziums begrenzt.

Alle vorbezeichneten, zum bekannten Stande der Technik gehörenden Verfahren haben den Nachteil, dass die danach hergestellten Formkörper nur unter Verwendung von Werkzeugen aus Diamant bearbeitbar sind.

Aufgabe der Erfindung ist es, ein Verfahren zur Herstellung von Formkörpern unter Verwendung von pulverförmigem und/oder körnigem Material zu schaffen, das auf wirtschaftliche Weise, das heisst mit verhältnismässig geringem Energieaufwand in relativ kurzer Zeit, ohne Verwendung von Vorrichtungen mit kurzer Lebensdauer und ohne Anwendung von hohen Drucken durchführbar ist und bei dem die dadurch hergestellten Formkörper entweder keiner Nachbearbeitung bedürfen oder, falls eine hohe Massgenauigkeit erforderlich ist, durch Werkzeuge bearbeitbar sind, an die hinsichtlich der Härte keine besonderen Anforderungen gestellt werden.

Diese Aufgabe wird gemäss der Erfindung bei einem Verfahren der eingangs erwähnten Art dadurch gelöst, dass als Ausgangsmaterial eine Mischung von körnigem und/oder pulverförmigem Silizium mit dem Kohlenstoffpulver in einem vorbestimmten Mischungsverhältnis verwendet wird, wobei zunächst die Körner und/oder Partikeln in einer Bindemittellösung aufgeschlämmt werden und im Anschluss daran die Aufschlämmung vorzugsweise mittels einer Düse in eine zur Abscheidung des Bindemittels dienende Flüssigkeit eingegeben wird, wobei die Körner oder Partikeln mit dem Bindemittel gleichmässig überzogen werden und in einer anschliessenden Verfahrensstufe die dabei gebildete Masse der mit dem Bindemittelfilm gleichmässig überzogenen Körner und/oder Partikeln durch Filtrieren oder Dekantieren von der Abscheidungsflüssigkeit abgetrennt und getrocknet wird, und dass der aus der Mischung gebildete Formkörper nach der unter Schutzgas erfolgten Verkokung zur Umsetzung von Kohlenstoff mit Silizium zu Siliziumkarbid in einer Inertgasatmosphäre unter einem Druck von 1 bar und höher, um das Abdampfen von Silizium zu verhindern, auf eine zwischen 1400°C und 1600°C liegende Temperatur mit grosser Geschwindigkeit aufgeheizt wird.

Das Verfahren gemäss der Erfindung hat den Vorteil, dass die von dem Bindemittel umhüllten Körner und/oder Partikeln in der Mischung sehr gleichmässig mit dem Bindemittel überzogen werden und infolgedessen nach dem Verkoken ebenfalls mit dem aus dem Bindemittel gebildeten Binderkoks gleichmässig überzogen sind. Das Verfahren hat ferner den Vorteil, dass beim Silizierungsvorgang jedes Siliziumkorn oder -partikel mit seiner gesamten Oberfläche mit dem Kohlenstoff des Binderkoks reagiert. Der Siliziervorgang verläuft daher auch im Mikrobereich bereits sehr gleichmässig ab. Daraus ergibt sich der weitere Vorteil, dass die erzeugte Reaktionswärme genügt, um auch benachbart liegende binderumhüllte Kohlenstoffkörner oder -partikeln in die Reaktion mit einzubeziehen. Der Siliziumvorgang wird zusätzlich noch durch die besondere Reaktivität des Binderkokses gefördert. Ein weiterer, ganz erheblicher Vorzug der durch die erfindungsgemässe Massnahme sich ergebenden Umhüllung mit Binderkoks besteht darin, dass der naturgemäss immer in geringer Menge auf der Oberfläche des Siliziums befindliche Sauerstoff sehr frühzeitig und restlos von der gesamten Siliziumoberfläche entfernt wird. Nur dadurch ist es möglich, Formkörper zu erzielen, bei denen auch im Mikrobereich noch ein homogener und gleichmässiger Verbund der in dieser Weise gebildeten Siliziumkarbidteilchen vorhanden ist.

Bei der Durchführung des Verfahrens gemäss der Erfindung wird ein relativ hoher Anteil an verkokbarem Bindemittel, der vorzugsweise zwischen etwa 20 bis 35 Gew.% des Grünkörpers liegen kann, über die Silizium- und Kohlenstoffkörner gleichmässig verteilt, und so eine relativ leicht formbare Pulvermischung erhalten. Geringere Bindermengen (z.B. etwa 15%) sind abhängig von der spezifischen Oberfläche der Ausgangspulvermischung anwendbar. Dieser über die Oberfläche der Pulverkörner verteilte Binder soll beim Verkoken vorzugsweise relativ viel Kohlenstoff als Binderkoks auf der Oberfläche der Pulverteilchen hinterlassen, so dass ausgehend von diesen Pulveroberflächen eine durchgreifende gleichmässige Reaktion bei der Umsetzung von Silizium und Kohlenstoff erfolgen kann.

Bevorzugt werden daher Bindemittel, die beim Verkoken einen Kohlenstoffrückstand von zumindest etwa 40 Gew.% (bezogen auf das eingesetzte Bindemittel) hinterlassen. Als Harze sind dabei insbesondere sauer und/oder alkalisch katalysierte Phenolformaldehydharze und deren Analoge und/oder Abkömmlinge wie Melaminharze, Thioharnstoff/Phenolharze, ·Harnstoff/Phenolharze, Formaldehyd/Resorcinharze, Furfurolharze u. dgl. brauchbar, die dem Fachmann gut bekannt sind.

Der schliesslich durch Umsetzung von Kohlenstoff und Silizium gebildete Körper hat eine gleichmässige Porosität. Diese Porosität ist durchgehend, und Körper, die gemäss der Erfindung erzeugt sind, können ausgezeichnet als Filter oder hochfeste leichte Gerüstmaterialien verwendet werden. Wenn dichte Körper gewünscht werden, können die Poren nachfolgend mit unterschiedlichen Materialien, wie weiter unten angegeben, gefüllt bzw. der Körper damit imprägniert werden. Man kann jedoch auch ggf. nach einer Zwischenberatung des relativ gut bearbeitbaren porösen Körpers eine Nachimprägnierung der Poren mit bindemittelhaltiger Silizium/Kohlenstoff-Mischung vornehmen und die Verkokungs- und Umsetzungsbehandlung gemäss der Erfindung wiederholen. Die Porosität der zu imprägnierenden SiC-Körper liegt insbesondere bei 30 bis 70%, vorzugsweise bei 40 bis 50%, wobei die Porengrössen abhängig von der Körnung des Ausgangsmaterials bei etwa 1 bis 500 μm, vorzugsweise bei 5 bis 30 μm liegen. Als Ausgangspulver werden dafür Mahlprodukte mit einer maximalen Korngrösse von bis zu 100 μm, vorzugsweise bis zu 60 μm für Kohlenstoff und von bis zu 50 μm, insbesondere bis zu 10 bis 20 μm für Silizium verwendet.

Das Molverhältnis von Silizium zu Kohlenstoff liegt je nach den gewünschten Eigenschaften des herzustellenden Formkörpers etwa zwischen 0,8 und 1,2. Dabei ist zugleich der für die Umsetzung freiwerdende Kohlenstoff des Bindemittels zu berücksichtigen.

Der Vorteil des erfindungsgemässen Verfahrens liegt darin, dass die verkokten Körper in grossen Dimensionen herstellbar sind, mechanisch sehr gut zu bearbeiten und infolgedessen auch dann, wenn es auf hohe Massgenauigkeit ankommt, auf einfache Weise bearbeitet sind.

Auch die Herstellung kompliziert geformter Siliziumkarbidkörper ist möglich, weil sich die aus der Mischung gebildete Masse auf einfache Weise, und zwar ohne oder allenfalls unter Anwendung geringen Pressdruckes, verformen lässt.

Die Abbildungsgenauigkeit des zu bildenden Formkörpers nach dem vorgegebenen Modell wird dadurch noch erhöht, dass bei der Umsetzung des Siliziums mit dem Kohlenstoff zu Siliziumkarbid sich die Abmessungen des Formkörpers isotrop und lediglich in einem solch geringen Masse ändern, dass danach hergestellte Formkörper vielfach bereits ohne Nachbearbeitung den Anforderungen an den vorgesehenen Verwendungszweck entsprechen, wobei es ohne weiteres möglich ist, bei der Formgebung die beim Verkorkungsvorgang erfolgende Schrumpfung und die geringfügige Volumenänderung bei der Silizierung zu berücksichtigen.

Bekannt ist zwar auch schon ein Verfahren zur Herstellung von Formkörpern mit einem Kern aus Kohlenstoff und einer Schutzschicht aus Karbid. Dabei wird zunächst ein aus von einem verkokbaren Bindemittel überzogenen Graphitteilchen gebildeter Formkörper hergestellt. Auf den Formkörper werden schichtweise eine oder mehrere aus einer aus Kohlenstoffpulver durch Beimischung von nahezu O Atom% bis 50 Atom% Siliziumpulver, bezogen auf die Mischung aus Silizium und Kohlenstoffpulver gebildete Masse bestehende Umhüllung aufgebracht. Das geschieht in der Weise, dass die körpernahe Schicht den geringsten und die Aussenschicht den höchsten Gehalt an Silizium aufweist. Der so beschichtete Körper wird unter Schutzgas bei Temperaturen zwischen 650°C und 850°C verkokt und im Anschluss daran zur Bildung von Siliziumkarbid in den Aussenschichten mit grosser Aufheizgeschwindigkeit auf eine Temperatur von 1550°C bis 1800°C gebracht (vergleiche DE-B 2 718 143).

Zum bekannten Stand der Technik gehört weiter ein Verfahren zur Herstellung von aus Graphit gebildeten Formkörpern mit einer Schutzschicht aus Karbid, deren Karbidgehalt nach aussen zunimmt, bei dem Silizium in einer Graphitpulver enthaltenden Phenolformaldehydharz-Bindemittellösung aufgeschlämmt und der Formkörper aus Graphit sodann ein- oder mehrmals in diese Aufschlämmung eingetaucht wird. Im Anschluss daran wird der Formkörper verkokt und zur Bildung der Aussenschicht aus Siliziumkarbid auf eine Temperatur zwischen 1550°C und 1800°C aufgeheizt (vergleiche DE-B 2 718 142).

Derartige Formkörper finden insbesondere in der chemischen Technik als Tiegel oder sonstige Behälter Verwendung, wenn es darauf ankommt, Reaktionen bei hohen Temperaturen durchzuführen. Sie haben den Vorteil, korrosionsfest zu sein.

Sie haben jedoch wegen des Aufbaus aus zwei unterschiedlichen Materialien, nämlich Graphit und Siliziumkarbid, einen begrenzten Anwendungsbereich, weil sie insbesondere nicht schlag-, stoss- und biegebeanspruchbar sind.

Aus der DE-B 2 232 719 ist ferner ein Verfahren zur Herstellung eines feuerfesten Steins aus einer Mischung von SiC, Si- sowie C-Teilchen bekannt. Bei den feuerfesten Steinen handelt es sich um Steine zur Auskleidung des unteren Schachtteils von Hochöfen. Die Anforderungen an derartige «grobkeramischen Steine» sind zwar auf Temperaturwechselbeständigkeit, Abriebfestigkeit und gute Wärmeleitfähigkeit, nicht aber auch auf einen möglichst homogenen Aufbau des Steins gerichtet.

In den Fällen, in denen das Bestreben besteht, das Verfahren gemäss der Erfindung noch wirtschaftlicher zu gestalten, weil es hierauf ganz besonders ankommt, ist es vorteilhaft, dass der Mischung des Pulvers aus Silizium und Kohlenstoff eine vorbestimmte Menge an Siliziumkarbid zugegeben wird. Dies geschieht zweckmässig in der Weise, dass der Mischung der umhüllten Silizium- und Kohlenstoffpartikeln Siliziumkarbidpulver, bei dem die Siliziumkarbidpartikeln mit dem Bindemittel umhüllt sind, zugegeben wird.

Der Bindemittelgehalt liegt bei dem Verfahren gemäss der Erfindung zwischen 20 Gew.-% und 35 Gew.-%, bezogen auf das Gewicht der Gesamtmasse.

Die Formgebung der aus der Mischung gebildeten Masse erfolgt zweckmässig in der Weise, dass die aus dem Ausgangsmaterial gebildete Masse der jeweils vorgesehenen Form entsprechend extrudiert wird. Eine andere zweckmässige Massnahme besteht darin, dass die aus dem Ausgangsmaterial gebildete Masse mittels einer Gesenkpresse unter Anwendung von geringem Druck geformt wird.

Um zu erreichen, dass mit Sicherheit auch bei Formkörpern grosser Abmessung eine bis in den Kern des Körpers sich hinein erstreckende Siliziumkarbidbildung erfolgt und um zu vermeiden, dass Temperaturinhomogenitäten während der Reaktion auftreten, ist es vorteilhaft, dass der nach der unter Schutzgas erfolgenden Verkokung gebildete Formkörper unter Schutzgasatmosphäre auf eine Temperatur von etwa 1350°C bis 1400°C aufgeheizt und auf dieser Temperatur so lange gehalten wird, bis innerhalb des Formkörpers nahezu kein Temperaturgradient mehr besteht und im Anschluss daran mit möglichst grosser Geschwindigkeit (die von der Ofenkapazität begrenzt wird) auf eine in dem Bereich zwischen etwa 1500°C und 1600°C liegende Temperatur aufgeheizt und nach Ablauf der Umsetzung von Silizium mit Kohlenstoff zu Siliziumkarbid abgekühlt wird.

Sollen Formkörper von ganz besonders hoher Massgenauigkeit hergestellt werden, so ist es ohne weiteres möglich, dass der nach dem Verkoken anfallende Formkörper zur weiteren Formgebung einer mechanischen Bearbeitung unterworfen wird.

Sollen kompliziert geformte Gegenstände nach dem Verfahren gemäss der Erfindung hergestellt werden, wie beispielsweise Schaufelräderkränze von Heissgasturbinen, so hat es sich als vorteilhaft erwiesen, dass zur Herstellung von Formkörpern komplizierter Formgebung zunächst Formkörper der Einzelteile («Teilformkörper») hergestellt und vor der Weiterbehandlung der daraus zu bildende Gesamtformkörper durch Verbindungsverfahren oder -mittel, wie Schrauben, Klemmen oder Steckverbindungen oder dergleichen, zusammengesetzt wird. Wird ein auf diese Weise aus Einzelteilen aufgebauter Formkörper entsprechend der bei dem Verfahren gemäss der Erfindung vorgesehenen Verfahrensstufe in einer Inertgasatmosphäre auf eine Temperatur zwischen etwa 1440°C und 1600°C erhitzt, so werden infolge der dabei stattfindenden Umsetzung von Silizium und Kohlenstoff zu Siliziumkarbid die Einzelteile so miteinander verbunden, dass ein vollintegrierter Gesamtkörper entsteht.

Für die Fälle, in denen es darauf ankommt, einen Formkörper mit verhältnismässig geringer Porosität herzustellen, besteht eine vorteilhafte Weiterausgestaltung des Verfahrens gemäss der Erfindung darin, dass der poröse Formkörper nach dem Verkoken mit in Kunstharz aufgeschlämmten Siliziumpulver imprägniert oder getränkt und sodann verkokt und nach dem Verkoken gemäss der Erfindung bei 1400°C bis 1600°C umgesetzt wird.

Um dichte Formkörper, insbesondere gas- und flüssigkeitsdichte Formkörper herzustellen, wird das Verfahren gemäss der Erfindung in der Weise ausgestaltet, dass der nach der Umsetzung von Silizium mit Kohlenstoff gebildete Formkörper mit durchgehender Porosität mit flüssigen Stoffen, wie Kunstharzen, Metallen, insbesondere Metallegierungen oder Hartmetallen, in der Weise getränkt oder imprägniert wird, dass der poröse Formkörper in einem Druckbehälter zunächst evakuiert und sodann in die zum Tränken oder Imprägnieren vorgesehene Flüssigkeit getaucht und dabei auf die Flüssigkeit ein Druck von bis zu 50 bar ausgeübt wird. Auf diese Weise wird ein Verbundkörper gebildet, bei dem ein Siliziumkarbidgerüst mit einem darin enthaltenen Körper aus einem anderen Werkstoff verzahnt wird. Wird beispielsweise Metall zum Tränken oder Imprägnieren verwendet, so ergibt sich auf diese Weise ein Körper, der die hohen Härteeigenschaften und die hohe Druckfestigkeit von Siliziumkarbid, zugleich aber auch infolge der Verzahnung durch das verwendete Metall dessen hohe Biege- und Scherfestigkeit besitzt. Die Gesamteigenschaften eines so gebildeten Körpers sind durch die Einzelkomponenten nicht erreichbar. Hinzu kommt als weitere vorteilhafte Eigenschaft das vergleichsweise geringe Gewicht derartiger Formkörper infolge der niedrigen Dichte des Siliziumkarbids.

Um aus mehreren Einzelteilen zusammengesetzte Formkörper zu bilden, ist es für den Fall, dass zur Verbindung Verbindungselemente verwendet werden, zweckmässig, das Verfahren gemäss der Erfindung auch zur Herstellung dieser Verbindungselemente zu verwenden.

Nach dem Verfahren gemäss der Erfindung hergestellte poröse Siliziumkarbidkörper sind für vielfältige Anwendungsgebiete geeignet. Man kann sie beispielsweise als Filterplatten für die Heissgasfiltration verwenden. Mit einem anderen Werkstoff, beispielsweise Metall imprägniert, sind sie zum Beispiel als Gleitringdichtungen verwendbar. Sie sind auch verwendbar als Formmaterial in Giessereien oder in der Gummiindustrie oder auch in der Glasindustrie. Doch ist der Anwendungsbereich nicht auf die vorstehend angegebenen Gebiete beschränkt.

Ausführungsbeispiel

Zur Herstellung eines Siliziumkarbidkörpers wurden 500 g feingemahlenes Siliziumpulver mit 305,6 g eines Novolak-Harzpulvers und 38,7 g eines Elektrographitfüllers mit einer maximalen Korngrösse von 60 μm wie folgt gemischt:

Unter Zugabe von 10 ml Essigsäure wurde das Binderharz in 900 ml Alkohol gelöst und auf 50°C erwärmt. Unter ständigem Rühren wurden nacheinander das Silizium- und das Kohlenstoffpulver hinzugegeben und etwa 1/2 Stunde gerührt. Danach wurde diese Aufschlämmung auf 20°C abgekühlt und mittels einer Mischdüse mit 20 l kaltem Wasser vermischt. Hierbei wurde der Novolak-Binder auf den Silizium- und Kohlenstoffpulverkörnern gleichmässig abgeschieden. Sodann wurde die Aufschlämmung unter Rühren auf 40°C erwärmt und anschliessend auf 20°C abgekühlt. Anschliessend wurde der gebildete Schlamm nach dem Absetzen dekantiert, filtriert und getrocknet. 80,5 g des so hergestellten Mischpulvers wurden in einem kleinen zylindrischen Formkasten mit Stempel gebracht, auf 110°C erhitzt und mit 20 bar verpresst. Der so erhaltene Grünkörper der eine Dichte von 1,34 g/cm aufwies, wurde durch Aufheizen in Inertgasatmosphäre auf 800°C verkokt und anschliessend unter einem Druck von 1 bar Argon schnell (mit 5°C/min) auf 1600°C aufgeheizt. Nach dem Abkühlen wurde ein Formkörper erhalten, der aus porösem Siliziumkarbid bestand. Die Dichte des Formkörpers betrug 1,42 g/cm³.

**Patentansprüche**

1. Verfahren zur Herstellung von Formkörpern auf Basis von Siliziumkarbid, bei denen auch im Mikrobereich ein homogener und gleichmässiger Verbund der Siliziumkarbidteilchen vorhanden ist, aus pulverförmigem und ggf. körnigem Ausgangsmaterial unter Verwendung von pulverförmigem und ggf. körnigem Kohlenstoff – wie gemahlenem Koks, Elektrographit, Naturgraphit, Holzkohle, Russ –, wobei die Körner oder Partikeln des Pulvers mit einem organischen Bindemittel umhüllt werden und in einer anschliessenden Verfahrensstufe die dabei gebildete Masse in vorbestimmter Weise als Grünkörper geformt und sodann durch Aufheizen bis zu einer Maximaltemperatur von 800°C bis 1000°C verkokt wird, dadurch gekennzeichnet, dass als Ausgangsmaterial eine Mischung von körnigem und/oder pulverförmigem Silizium mit dem Kohlenstoffpulver in einem vorbestimmten Mischungsverhältnis verwendet wird, wobei zunächst die Körner und/oder Partikeln in einer Bindemittellösung aufgeschlämmt werden und im Anschluss daran die Aufschlämmung vorzugsweise mittels einer Düse in eine zur Abscheidung des Bindemittels dienende Flüssigkeit eingegeben wird, wobei die Körner oder Partikeln mit dem Bindemittel gleichmässig überzogen werden und in einer anschliessenden Verfahrensstufe die dabei gebildete Masse der mit dem Bindemittelfilm gleichmässig überzogenen Körner und/oder Partikeln durch Filtrieren oder Dekantieren von der Abscheidungsflüssigkeit abgetrennt und getrocknet wird, und dass der aus der Mischung gebildete Formkörper nach der unter Schutzgas erfolgten Verkokung zur Umsetzung von Kohlenstoff mit Silizium zu Siliziumkarbid in einer Inertgasatmosphäre unter einem Druck von 1 bar und höher, um das Abdampfen von Silizium zu verhindern, auf eine zwischen 1400°C und 1600°C liegende Temperatur mit grosser Geschwindigkeit aufgeheizt wird.

2. Verfahren nach Anspruch 1, dadurch abgewandelt, dass der Mischung des Pulvers aus Silizium und Kohlenstoff eine vorbestimmte Menge an Siliziumkarbid zugegeben wird.

3. Verfahren nach Anspruch 2, dadurch gekennzeichnet, dass der Mischung der umhüllten Silizium- und Kohlenstoffpartikeln Siliziumkarbidpulver, bei dem die Siliziumkarbidpartikeln mit dem Bindemittel umhüllt sind, zugegeben wird.

4. Verfahren nach einem der Ansprüche 1 bis 3, dadurch gekennzeichnet, dass eine Bindemittelmenge zwischen 20 Gew.% und 35 Gew.%, bezogen auf das Gewicht der Gesamtmasse, beigegeben wird.

5. Verfahren nach einem der Ansprüche 1 bis 4, dadurch gekennzeichnet, dass die aus dem Ausgangsmaterial gebildete Masse der jeweils vorgesehenen Form entsprechend extrudiert wird.

6. Verfahren nach einem der Ansprüche 1 bis 4, dadurch gekennzeichnet, dass die aus dem Ausgangsmaterial gebildete Masse mittels einer Gesenkpresse unter Anwendung von geringem Druck geformt wird.

7. Verfahren nach einem der Ansprüche 1 bis 6, dadurch gekennzeichnet, dass der nach der unter Schutzgas erfolgenden Verkokung gebildete Formkörper unter Schutzgasatmosphäre auf eine Temperatur von 1350°C bis 1400°C aufgeheizt und auf dieser Temperatur so lange gehalten wird, bis innerhalb des Formkörpers nahezu kein Temperaturgradient mehr besteht und im Anschluss daran mit grosser Geschwindigkeit auf eine in dem Bereich zwischen 1500°C und 1600°C liegende Temperatur aufgeheizt und nach Ablauf der Umsetzung von Silizium mit Kohlenstoff zu Siliziumkarbid abgekühlt wird.

8. Verfahren nach einem der Ansprüche 5 oder 6, dadurch gekennzeichnet, dass der nach dem Verkoken anfallende Formkörper zur weiteren Formgebung einer mechanischen Bearbeitung unterworfen wird.

9. Verfahren nach einem der vorhergehenden Ansprüche, dadurch gekennzeichnet, dass zur Herstellung von Formkörpern komplizierter Formgebung zunächst Formkörper der Einzelteile hergestellt und vor der Weiterbehandlung der daraus zu bildende Gesamtformkörper durch Verbindungsverfahren oder -mittel, wie Schrauben, Klemmen oder Steckverbindungen oder dergleichen, zusammengesetzt wird.

10. Verfahren nach einem der Ansprüche 1 bis 9, dadurch gekennzeichnet, dass der poröse Formkörper nach dem Verkoken mit in Kunstharz aufgeschlämmten Siliziumpulver imprägniert oder getränkt und sodann verkokt wird.

11. Verfahren nach einem der Ansprüche 1 bis 10, dadurch gekennzeichnet, dass der nach der Umsetzung von Silizium mit Kohlenstoff gebildete Formkörper mit durchgehender Porosität mit flüssigen Stoffen, wie Kunstharzen, Metallen, insbesondere Metallegierungen oder Hartmetallen, in der Weise getränkt oder imprägniert wird, dass der poröse Formkörper in einem Druckbehälter zunächst evakuiert und sodann in die zum Tränken oder Imprägnieren vorgesehene Flüssigkeit getaucht, und dabei auf die Flüssigkeit ein Druck von bis zu 50 bar ausgeübt wird.

12. Anwendung des Verfahrens nach einem der Ansprüche 1 bis 11 zur Herstellung von Verbindungselementen zur Verbindung von Einzelteilen eines zusammengesetzten Formkörpers.

## Claims

1. Process for producing shaped bodies based on silicon carbide, wherein there is a homogeneous and uniform bonding of the silicon carbide particles even in the micro range, from pulverulent and possibly granular starting material with the use of pulverulent and possibly granular carbon – such as ground coke, electrographite, natural graphite, charcoal, carbon black – and the granules or particles of powder are coated with an organic binding agent and in a subsequent process stage the mass thus formed is shaped in a predetermined manner as a green body and is then carbonised by heating to a maximum temperature of 800°C to 1000°C, characterised in that a mixture of granular and/or pulverulent silicon with the carbon powder in a predetermined mixture ratio is used as starting material, the granules and/or particles being first of all put in suspension in a binding agent solution, and then the suspension is fed, preferably by means of a nozzle, into a liquid serving for the precipitation of the binding agent, in which the granules or particles are uniformly coated with the binding agent, and in a following process stage the mass thus formed comprising granules and/or particles coated uniformly with the binding agent film is separated by filtration or decantation from the precipitation liquid and dried, and that the shaped body formed from the mixture is heated, after the carbonisation carried out under protective gas, for reaction of carbon with silicon to form silicon carbide, in an inert gas atmosphere under a pressure of 1 bar and above, to prevent the evaporation of silicon, at a high speed to a temperature of between 1400°C and 1600°C.

2. Process according to claim 1, modified in that a predetermined quantity of silicon carbide is added to the silicon and carbon powder mixture.

3. Process according to claim 2, characterised in that silicon carbide powder, wherein the silicon carbide particles are coated with the binding agent, is added to the mixture of coated silicon and carbon particles.

4. Process according to one of claims 1 to 3, characterised in that a quantity of binding agent between 20% by weight and 35% by weight relatively to the weight of the total mass is added.

5. Process according to one of claims 1 to 4, characterised in that the mass formed from the starting material is extruded appropriately to the shape which is to be produced in each particular case.

6. Process according to one of claims 1 to 4, characterised in that the mass formed from the starting material is shaped by means of a die press with the use of inconsiderable pressure.

7. Process according to one of claims 1 to 6, characterised in that the shaped body formed after the carbonisation carried out under a protective gas atmosphere is heated under a protective gas atmosphere to a temperature of 1350°C to 1400°C and held at this temperature until there is almost no temperature gradient remaining within the shaped body, and then is heated at high speed to a temperature in the range between 1500°C and 1600°C, and is cooled after the reaction of silicon with carbon to give silicon carbide is effected.

8. Process according to one of claims 5 or 6, characterised in that the shaped body obtained after the carbonisation is subjected to mechanical processing for further shaping.

9. Process according to one of the preceding claims, characterised in that for production of shaped bodies of complicated configuration first of all shaped bodies of component parts are produced and, before further processing, the whole shaped body to be formed therefrom is assembled by connecting methods or means such as screwing, clamping, or plugging connections or the like.

10. Process according to one of claims 1 to 9, characterised in that the porous shaped body is soaked or impregnated with silicon powder put into suspension in synthetic resin after the carbonisation, and then carbonised.

11. Process according to one of claims 1 to 10, characterised in that the shaped body formed after the reaction of silicon with carbon, with continuous porosity, is soaked or impregnated with liquid substances such as synthetic resins, metals, especially metal alloys or hard metals, the method being that the porous shaped body is first of all evacuated in a pressure vessel and then immersed into the liquid provided for the soaking or impregnation, and a pressure of up to 50 bars is applied to the liquid.

12. Use of the process according to one of claims 1 to 11 for producing connecting elements for connecting the component parts of an assembled shaped body.

## Revendications

1. Procédé de préparation de corps façonnés à base de carbure de silicium, dans lesquels il y a, aussi à l'échelle microscopique, une liaison homogène et uniforme des particules de carbure de silicium, à partir d'une matière de départ sous forme de poudre et, le cas échéant, en grains et en utilisant du carbone sous forme poudre et, le cas échéant, en grains – comme du coke broyé, de l'électrographite, du graphite naturel, du charbon de bois, de la suie – les grains ou les particules de la poudre étant enrobés d'un agent liant organique et, dans un stade suivant du procédé, la masse ainsi formée étant mise sous la forme de corps verts d'une manière prescrite et étant cokéfiée immédiatement par chauffage jusqu'à une température maximale de 800°C à 1000°C, caractérisé en ce qu'il consiste à utiliser comme matière de départ un mélange de silicium en grains et/ou sous forme de poudre à de la poudre de carbone en un rapport de mélange prescrite, à mettre d'abord les grains et/ou les particules en suspension dans une solution de l'agent liant et ensuite à charger la suspension, de préférence au moyen d'une buse, dans un liquide servant à séparer l'agent liant, les grains ou les particules étant enrobés uniformément de l'agent liant, et, dans un stade suivant du procédé, à séparer du liquide de séparation, par filtration ou par décantation, la masse ainsi formée des grains et/ou des particules enrobés uniformément de la pellicule d'agent liant et à la sécher, et, après la cokéfaction effectuée sous gaz protecteur pour transformer le carbone et le silicium en carbure de silicium, à porter, à grande vitesse, les corps façonnés constitués en le mélange, à une température comprise entre 1400°C et 1600°C, dans une atmosphère de gaz inerte sous une pression de 1 bar et supérieure à 1 bar, pour empêcher l'évaporation du silicium.

2. Procédé suivant la revendication 1, caractérisé en ce qu'il consiste à ajouter une quantité prescrite de carbure de silicium au mélange de poudre de silicium et de carbone.

3. Procédé suivant la revendication 2, caractérisé en ce qu'il consiste à ajouter au mélange de particules enrobées de silicium et de carbone, de la poudre de carbure de silicium, dans laquelle les particules de carbure de silicium sont enrobées de l'agent liant.

4. Procédé suivant l'une des revendications 1 à 3, caractérisé en ce qu'il consiste à ajouter une quantité d'agent liant, représentant de 20 à 35% du poids de la masse totale.

5. Procédé suivant l'une des revendications 1 à 4, caractérisé en ce qu'il consiste à extruder, à la forme prévue, la masse formée de la matière de départ.

6. Procédé suivant l'une des revendications 1 à 4, caractérisé en ce qu'il consiste à façonner la masse formée de la matière de départ au moyen d'une presse à estamper en utilisant une faible pression.

7. Procédé suivant l'une des revendications 1 à 6, caractérisé en ce qu'il consiste à porter le corps façonné formé après la cokéfaction s'effectuant sous un gaz protecteur, dans une atmosphère de gaz protecteur, à une température de 1350°C à 1400°C, et à le maintenir à cette température jusqu'à ce qu'il n'y ait pratiquement plus de gradient de température au sein du corps façonné, et ensuite à le porter à grande vitesse à une température se trouvant dans la plage comprise entre 1500°C et 1600°C, et à le refroidir après que la réaction de transformation du silicium et du carbone en carbure de silicium s'est déroulée.

8. Procédé suivant l'une des revendications 5 ou 6, caractérisé en ce qu'il consiste à soumettre le corps façonné produit après la cokéfaction, à un traitement mécanique, en vue d'un autre façonnage.

9. Procédé suivant l'une des revendications précédentes, caractérisé en ce qu'il consiste, pour préparer des corps façonnés de forme compliquée, à préparer d'abord des corps façonnés des parties individeulles, et avant le traitement ultérieur, à assembler le corps façonné d'ensemble à former à partir de celles-ci par un procédé ou par des moyens d'assemblage comme des vis, des pinces ou des pièces de liaison mâles, femelles, ou des pièces semblables.

10. Procédé suivant l'une des revendications 1 à 9, caractérisé en ce qu'il consiste à imprégner le corps façonné poreux, après la cokéfaction, d'une poudre de silicium en suspension dans une résine de matière plastique, ou à en imbiber et à le cokéfier immédiatement ensuite.

11. Procédé suivant l'une des revendications 1 à 10, caractérisé en ce qu'il consiste à imbiber ou à imprégner le corps façonné formé après la réaction du silicium sur le carbone, et ayant une porosité continue, de substance liquides comme des résins de matières plastiques, des métaux, notamment des alliages métalliques ou des métaux durs, en faisant tout d'abord, dans un récipient tenant la pression, le vide dans le corps façonné poreux et en le plongeant immédiatement dans le liquide prévu pour l'imbibation ou pour l'imprégnation, et en appliquant au liquide une pression allant jusqu'à 50 bars.

12. Utilisation du procédé suivant l'une des revendication 1 à 11, pour préparer des éléments de liaison en vue de relier des pièces individuelles d'un corps façonné composé.